# EUROPEAN PATENT SPECIFICATION

(11) **EP 4 143 533 B1**
(45) Date of publication and mention of the grant of the patent: **16.09.2026**
(21) Application number: 20726538.0
(22) Date of filing: 26.04.2020
(51) Int. Cl.: G01N 15/02, G01N 15/06, G01N 15/14, G01N 21/00

(54) **AIRBORNE BACTERIA DETECTION SYSTEM**
LUFTGESTÜTZTES BAKTERIENERKENNUNGSSYSTEM
SYSTÈME DE DÉTECTION DE BACTÉRIES EN SUSPENSION DANS L'AIR

(43) Date of publication of application: 08.03.2023
(73) Proprietor: Tomasov, Viktor, 13514 Tallinn (EE); Adamchuk, Oleg, Grays, Essex RM17 5EF (GB)
(72) Inventor: Tomasov, Viktor, 13514 Tallinn (EE); Adamchuk, Oleg, Grays, Essex RM17 5EF (GB)
(74) Representative: DREISS Patentanwälte PartG mbB
(86) International application number: PCT/IB2020/053902
(87) International publication number: WO 2021/220032

(56) References cited:
- GB-A- 2 403 289
- US-A1- 2006 197 033
- US-A1- 2006 250 606
- US-A1- 2010 085 569
- US-A1- 2012 196 314
- US-A1- 2015 168 288
- US-A1- 2017 241 893
- US-A1- 2017 276 592

## Description

### Technical field

The invention is related to a device for detecting and/or identifying of airborne bio-particles both indoors and outdoors. The high measuring sensitivity of the device facilitates the detection of even low concentrations of airborne bio-particles in extremely clean rooms. The device performs independent continuous air monitoring.

### Background Art

Determining the amount of micro-particles in the air is a critical task for many fields. Strict norms regulate room air quality in medical establishments and pharmacological companies. Long and thorough measurements of microorganism levels in air are thus required. Developments in food technology place ever higher requirements on conditions in food processing facilities. Air pollution by microbiology industry, where the products are the results of using various microorganisms, are of special concern. Since the processes are not sufficiently isolated from the environment, viable germs and their by-products can enter the ambient atmosphere of the production facilities.

Levels of microorganisms in the atmosphere can vary greatly. The levels are especially high in poorly ventilated rooms and in places with no wet cleaning. In the course of non-hygienic dry cleaning, dust becomes unsettled and dispersed in the atmosphere, carrying significant numbers of microorganisms.

Atmospheric microflora is very diverse, comprising hundreds of species, with sporogonial bacteria or viruses being the most prevalent. Many of them contribute to the development of infectious diseases in humans, animals, and plants, spoil food, and damage objects in the environment. Pathogenic microflora enters the air with droplets of saliva and sputum when coughing, talking, sneezing, as well as with dust particles from the soil and from various objects. The weight of the small droplets with microorganisms is negligible, meaning that they remain airborne for long periods of time and are dispersed over large areas. The role of dust of microorganisms is to disseminate via air those types of microorganisms that do not lose viability when dried (tuberculosis agent, spore forms).

Airborne bacterial contamination of residential premises is many times higher than the contamination of outdoor air. The microflora of indoor air is of a different nature. It contains a lot of microbes of human microflora and pathogenic microbes emanated from the oral cavity when coughing, sneezing, talking, laughing. Open wounds on any part of the body are another source of the pathogenic flora. Large numbers of people and their prolonged stay in poorly ventilated rooms maximize air pollution with pathogenic flora. An even greater danger is posed by the air of infectious disease clinics and surgical hospitals, teeming with pathogenic flora. Air serves as a transportation medium for purulent cocci (staphylococci, streptococci, pneumococci, meningococci), pathogens of tuberculosis, diphtheria, anthrax, pertussis, plague, glanders, as well as pathogenic fungi, various viruses, etc.

Biological aerosols (bioaerosols) are made up of airborne biological particles, like bacteria, fungi, viruses, pollen and their derivatives, such as allergens, endotoxins, mycotoxins. The most common microorganisms can cause respiratory infections and allergic reactions in susceptible people.

Establishing the paths of bioaerosol distribution and the real-time detection of ambient microbes, human bioaerosol emissions, and bioprotection can be a difficult task. The composition of bioaerosols, the growth of biological components and their distribution in the room or the facility can be affected by heating, ventilation, air conditioning and humidification systems. Efficient counteracting of the effects of the biological air pollution largely depends on how quickly the very fact of the presence of pathogenic particles in the atmosphere is established; therefore, the fact of a biological threat should be determined in real time. Methods for analyzing samples lending themselves to standardization have been developed for ambient bioaerosols. Current methods and techniques of direct microbiological control based on sampling microbial cells found in the air with their subsequent seeding on the surface of a dense nutrient medium, culturing and counting the cultured colonies, are insufficient as they are slow, cumbersome, and labour consuming. Additionally, in the process of sampling the air and seeding the sample on a nutrient medium, the cells of microorganisms can be injured, resulting in the distortion of the results. Highly sensitive and rapid methods for the detection of pathogenic bioaerosols in the totality of the background atmospheric aerosols of both biological and non-biological origin are thus urgently required.

For the purposes of the rapid detection and identification of pathogenic biological particles of a respirable (retained in the human respiratory organs) fraction of 1-10 µm, a flow-optical analysis method (FOAM) can be applied, measuring fluorescence and light scattering by individual aerosol particles. In FOAM, the sampling and illumination of particles occur in a stream of air, which allows for analysing up to 10⁴ individual aerosol particles per second and producing analysis results within a few minutes.

Generally, in various instrumental FOAM systems, the separation of biological and non-biological aerosols, as a rule, is based on the analysis of fluorescence of tryptophan present in the bioaerosol particles as part of proteins and amino acid residues and excited within the wavelength range of 250-290 nm [Sivaprakasam et al., 2004; Burstein, 2001; Kochelaev & Volchek, 2011].

FOAM analysis may result in the false-positive detection of pathogenic bioaerosols due to the tryptophan content of particles forming the natural (non-pathogenic) biological background present in the ambient air. The task is complicated by the fact that the atmospheric bioaerosol background is a dynamic system whose fluorescent properties can change under natural conditions when exposed to sunlight, temperature, humidity, and other factors. Thus, correct identification of pathogenic particles in an aerosol using FOAM requires increasing the selectivity of the method. The optical systems of current FOAM devices include additional sources of radiation and (or) photodetectors to increase selectivity. In one example, an additional excitation source is used for the wavelength range of 330-380 nm, which allows recording the fluorescence spectra of NADH and flavins within the spectral range of 400-600 nm in addition to the tryptophan fluorescence spectrum. Another way to increase the FOAM selectivity is scattered light detection. The normalization of fluorescence signals to the signal of elastic scattering can significantly reduce inconsistencies in recorded data related to the instability of radiation sources, uneven distribution of radiation intensity within the analysed area, as well as reduce the inconsistency of data due to the wide range of the aerosol particles sizes. At the same time, any increase in the number of the optical elements (light sources and detectors) complicates the design of the device, increases its energy consumption, weight and size, significantly increases its cost, complicates adjustments and reduces reliability. This is inconsistent with the requirements for 'portable' FOAM devices, such as compactness, reliability, and low power consumption [Jeys et al., 2007; Pan, 2015; Usachev et al., 2012].

The FOAM systems examples are described in some patents.

AU2002367966B2 discloses a system and method for detecting and classifying biological particles. According to the invention a continuous wave laser excites a biological particle. Detection channels are created to detect light scattered by the biological particle, and to detect any auto-fluorescence emitted by the biological particle. Additional channels can also detect light emitted by auto-fluorescence of the biological particle when simultaneously excited by light at harmonics of the laser's fundamental wavelength. The biological particle is identified using Mie scattering and auto-fluorescence. Ratio-metric calculations generated by calculating ratios of detected peak heights or integrated pulse values in the channels provides additional information for identifying and classifying the biological particle.

EP2235736B1 discloses a method and apparatus for detecting pathogens and particles in a fluid, comprising a sample cell; a light source on one side of the sample cell for sending a focused beam of light through the sample; a particle size detector positioned in the light path for detecting a portion of forward scattered light; a pair of fluorescence detectors positioned off axis from the beam of light; and a pair of elliptical mirrors positioned such that an intersection of the incoming particle stream and the light beam are at one foci of each ellipsoid, and one of said pair of fluorescence detectors lies at the other foci.

US7576844 discloses systems and methods for detecting aerosols. The system comprises a first emitter configured to emit first excitation energy into a first region of space; a second emitter configured to emit second excitation energy into a second region of space, wherein the system is configured such that, after the particle passes through the first region, the particle is likely to pass through the second region; an emission detector having a detector input; a first filter disposed in front of a first portion of the detector input; a second filter disposed in front of a second portion of the detector input; and one or more optical elements.

WO2007011854A2 discloses system that includes an excitation source for providing a beam of electromagnetic radiation. A first wavelength selective device is positioned to be impinged by the beam of electromagnetic radiation. A medium containing particles is positioned to be impinged by the beam of electromagnetic radiation. At least a portion of the beam of electromagnetic radiation becomes scattered within the medium, the scattered electromagnetic radiation including forward scattered electromagnetic radiation and backward scattered electromagnetic radiation. An optical detector is positioned to receive backward and/or forward scattered electromagnetic radiation.

The prior art patents use a laser irradiation scheme for bioparticles in air flow with various methods of signal detection. The detection volume is very small and the signal expose time is short, that greatly complicates the signal registration scheme. Despite many ideas, only one commercial device BioVigilant IMD-A System is released today, that implements a laser excitation circuit. Another example of prior art is US2015/168288 which also discloses an optical detection system.

### Summary of the invention

The invention provides a device, as defined in claim 1 and its dependent claims 2-13, for continuous monitoring of the concentration of pathogenic biological particles: bacteria and viruses, their fragments, and other particles suspended in ambient air. High sensitivity allows continuous monitoring of air quality at low levels of pathogenic particles in ambient air, which is important for monitoring very clean rooms (hospitals and clean production). The ease of use and the small dimensions of a device based on the claimed invention make it possible to mount the device immediately in places suitable for air monitoring. This is achieved by applying a new detection system and efficiently arranging the parts of the instrument. One of the key innovations is a custom optical system with a photon counter sensor, the method of installation of the system in the device, and the algorithm of operation of the system. The use of this new arrangement eliminates the need for additional optical elements that can significantly increase measurement errors. The highly reliable components of the device allow using it continuously for a long period of time without constant maintenance.

The claimed invention has several advantages over currently known devices. Its small size and ease of use allow the device to be operated without the prior training of personnel. The device is designed following the principle of "turn on and forget". The device itself chooses an appropriate operating mode and transmits data either to a display or to a computer via a communication system. The special arrangement of the components and special technical solutions used in the electronic and optical circuits allow reducing the dimensions of the device while still retaining high sensitivity. The new design of the optical unit also eliminates the strict requirement to align the sensor position with the emission of the light beam (710). The signal and excitation systems are resistant to thermal and mechanical stresses, including impacts. The operational algorithm includes automatic adjustment to changing operating conditions and regular automatic testing of the status of the device. High level of stability also means high repeatability of measurements. High sensitivity allows detecting very low concentrations of suspended particles in ambient air.

### Brief description of the drawings

Figure 1. Scheme of device.
Figure 2. Detailed scheme of air flow inlet unit and outlet unit.
Figure 3. Detailed scheme of excitation channel.
Figure 4. Detailed scheme of sensor channel.
Figure 5. Detection area.
Figure 6. Emitting diagram of particle.
Figure 7. Signal example.
Figure 8. Block-scheme of power units.

### Operating principle of the device

The main operating principle of the device is based on the specific excitation of the components of biological particles using a source of excitation and registration of a fluorescent signal using a sensor. The narrow wavelength range (250-300 nm) of the exciting radiation is designed to excite the mono- and polycyclic structures of organic molecules. Biological objects contain a large variety of protein components which in turn contain large quantities of a relatively strong tryptophan fluorophore. Tryptophan becomes the main source of the signal and its maximum emission spectrum is used to register the particles.

The main virulent biological objects (VBO) in ambient air include bacteria, viral particles, and fungal spores, 1 to 100 microns large. The dimensions of the VBO significantly exceed the excitation wavelength; therefore the photon does not envelop the particle but is absorbed by the particle matter; the fluorophores in the particle are thus excited and begin to emit emission light.

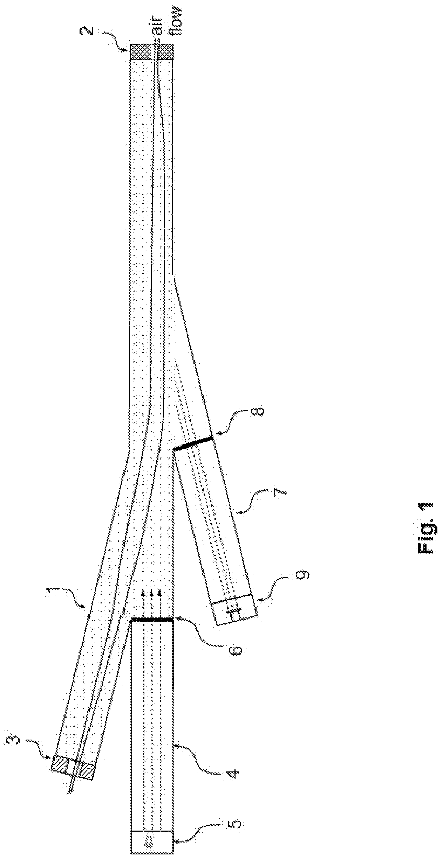

The core technology of the device is presented in **Fig. 1****.** The optical structure of the device consists of several units: airflow channel (1) with inlet (2) and outlet (3) units, excitation channel (4) with excitation unit (5), sensor channel (7) with sensor unit (9).

The detectable particle flows through the air flow channel and is radiated from the excitation channel, generating a fluorescence signal that enters the sensor channel (7) and the sensor unit (9). The operating mode of the device is controlled by the controller combined with the processor (81). The processor calculates the concentration of the particles, which it outputs to the display (82) or any other output device or transmits to another device via the communication module (83).

### Channel layout

The geometry of the channel arrangement **(****Fig. 1****)** is calculated based on the direction of the incoming light beam from the source and the geometry of the irradiated side of the object. The excitation channel (4) and the sensor channel (7) can also be arranged at a minimal angle relative to each other, limited only by the size of the excitation unit (5) and the sensor unit (9), although this will require the protection of the sensor from the interference irradiated from the excitation unit (5).

The airflow channel (1) is arranged at a slight angle relative to the excitation channel on the opposite side of the sensor channel (7). The airflow channel is shifted relative to the sensor channel towards the air flow, so that the air flow remains laminar in the detection zone.

### Construction of the airflow channel (1)

The construction of the airflow channel (1) solves three problems: it creates a laminar flow in the channel, it completely absorbs any light coming from outside the channel, and it improves signal registration.

The airflow channel (1) is a long tube with two sections. The first section of the airflow channel (1) begins with the input unit (2) and is located on the same axis as the excitation channel (4) as shown in **Fig. 1****,** which allows irradiating particles immediately at the entrance of the channel. The second section diverts the air flow from the detection zone and to the outlet through the output unit (3). It is located at a minimal angle to the first section in order to bypass the excitation channel without creating turbulence in the flow. The material of the channel is selected to ensure that particles would not attach to the walls and the radiation of the source or the excited signal is not absorbed.

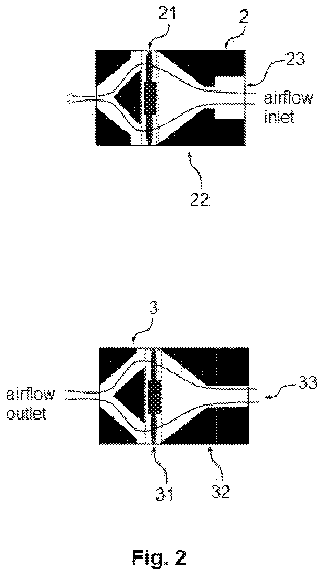

Air enters the airflow channel (1) through the inlet unit (2) **(****Fig. 2****.),** consisting of a light trap with a channel (22) for pumping air, a fan (21), and a universal accessory mounting socket (23). The special shape and absorbing material of the light trap are used to completely suppress any external illumination and UV excitation light from LED source.

The fan (21) is located between the light trap (22) and the mounting socket (23), and it is interconnected with the outlet fan (31). This allows creating a laminar air flow inside the channel with adjusted flow rate.

**Fig. 2****.** shows the output unit of the device (3), including a fan (31) and a light trap (32) with an output channel. The special shape and absorbing material of the light trap are used to completely suppress UV exciting radiation from LED source in order to avoid the radiation leaving the device.

Combining the operation of the fans (21) and (31) allows creating a uniform air flow in the channel and precisely controlling its speed regardless of external influences. The flow rate is adjusted so that the sensor (91) has enough time to register a signal coming from the particles flying with the stream while the particle remains in the detection zone (10).

### Excitation channel (4)

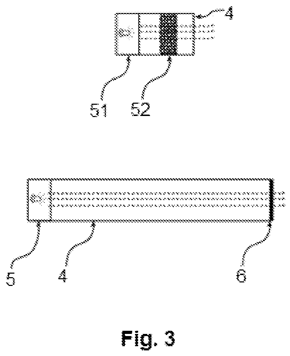

The excitation channel (4) **(****Fig. 3****)** consists of integrated the excitation unit (5) (LED source (51) and filter (52)), and the outlet window (6). It is located at a minimal angle relative to the airflow channel (1) which is limited only by the size of the radiation source (51). The excitation channel (4) is connected to the airflow channel (1) through the outlet window (6). The outlet window (6) of the excitation channel (4) can be covered with an optically transparent material (example: quartz glass) to prevent contamination of the channel and to prevent formation of an additional thickening on the way of the air flow, which could produce turbulence and unpredictable behaviour of particles.

The LED source of exciting radiation (51) operates in the UV range with a maximum radiation wavelength of 280 nm and has sufficient radiation power. A cut-off filter (52) @ 300 nm is installed in the radiation path to suppress any incidental LED (51) emission with a wavelength over 300 nm.

The excitation channel (4) is a long tube going from the LED radiation source (51) to the detection zone (10). The length of the channel is sufficient to collimate the rays of the source. The channel material must not absorb rays hitting the channel walls or emit its own signal. No optical designs that are sensitive to mechanical stresses can be used in the collimation zone.

### Sensor channel (7)

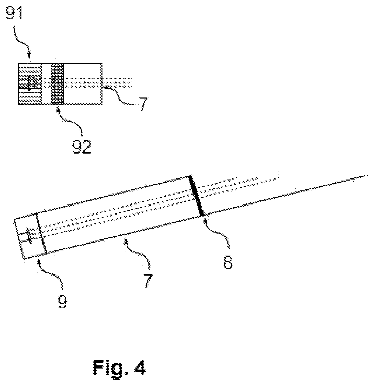

The sensor channel (7) **(****Fig. 4****)** consists of integrated an inlet window (8) and a sensor unit (9). The input window (9) may be covered with a transparent material or fully open. An open inlet window is recommended in very clean rooms where the flow rate does not allow biomaterial to accumulate in the channel. The advantage of such a system is that the material of the window does not absorb any parts of the signal.

In rooms with more polluted air, the sensor channel is more likely to clog, making it necessary to close the channel entrance with an optically transparent material, such as silica glass.

The walls of the channel (7) are polished and reflective inside to reflect any incident rays. The angle of inclination in respect to the excitation channel (4) and the length of the channel are designed so as to avoid exposure from the source. The channel material reflects well and does not absorb the signal at the operational wavelength.

Channel (7) is located at a minimal angle relative to the airflow channel (1) in order to register a signal from the largest emitting particle area (105) and to increase the detection zone (10). Accordingly, the path of the particle in the sensor-covered area increases and the signal registration period extends. The minimal angle between the channels is limited only by the means used for attaching the sensor unit (9) to the end of the sensor channel.

The sensor unit **(****Fig. 4****)** consists of a band pass filter (92) and a Single Photon Counter (SPC) sensor (91). The band pass filter BP 60 nm @ 350 nm (92) is installed directly in front of the sensor and filters out the tryptophan signal, suppressing the rest of the bandwidth.

The SPC (91) registers the incoming and filtered photon flux. The information about the number of registered photons for a certain period of time is transmitted from the SPC (91) to the processor (81). The processor calculates the concentration of particles per air volume unit based on predetermined formulas and calibration.

### Detection zone (10)

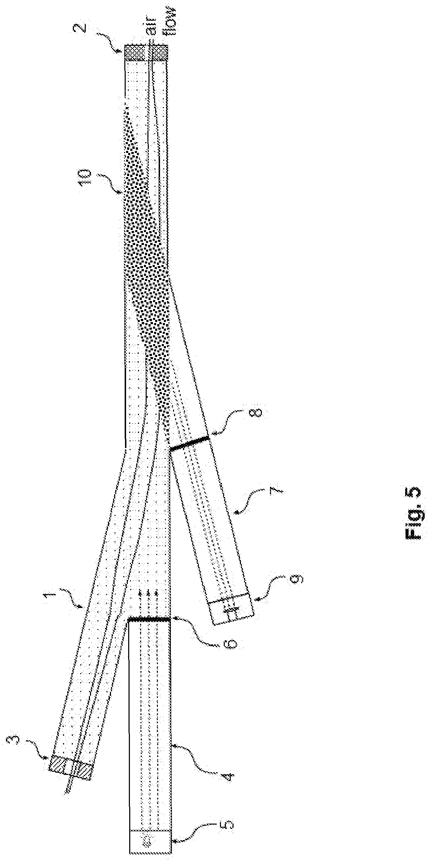

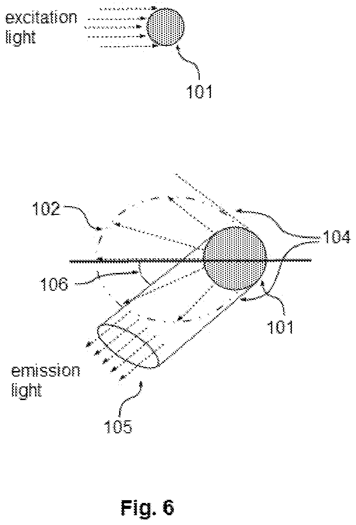

The detection zone (10) **(****Fig. 5****)** is created inside the airflow channel (1) at the intersection of the excitation channel (4) and the sensor channel (7); in this zone the sensor (91) registered emission light radiation from the particles. The irradiation of particles begins immediately after they enter the airflow channel (1). Since the excitation channel (4) exits into the airflow channel (1) and the particles are irradiated from the side of the radiation source (51), only half of the particle is irradiated resulting in the excitation of tryptophan fluorophore molecules found on the surface. The dark side of the particle receives an order of magnitude less excitation radiation and provides a smaller contribution to the signal. The indicatrix of the emission light (102) of macro objects comprising a dense optical medium (such as bacteria) is directed towards the source of excitation due to the shadow effect of the object and absorption by the internal medium **(****Fig. 6****).**

The sensor channel is positioned at such an angle to cover the sector (105) with increased emission signal intensity. This arrangement of the sensor channel forms the geometry of the detection zone (10) **(****Fig. 5****).** The length of the zone (10) is important for adjusting the sensor (51) operation mode respective to the air flow (determined by the operation mode of the fans (21) and (31)), since the time spent by the particles in the detection zone (10) and therefore the signal accumulation time depends on the flow rate. The signal can reach the sensor in a straight line directly from the particle or as a result of reflections from the walls of the sensor channel (7).

### Operating mode of the device

The high accuracy and reliability of the device are also ensured by a special operating mode. The device performs regular self-tests at intervals depending on the room type. The testing is more frequent in more contaminated rooms. This allows detecting any contamination of the device or reductions in the source power capacity and correcting them. For the self-testing period both fans (21) and (32) stop and the processor (81) records background data. After the self-test, the device continues operating in in monitoring mode.

### Signal processing

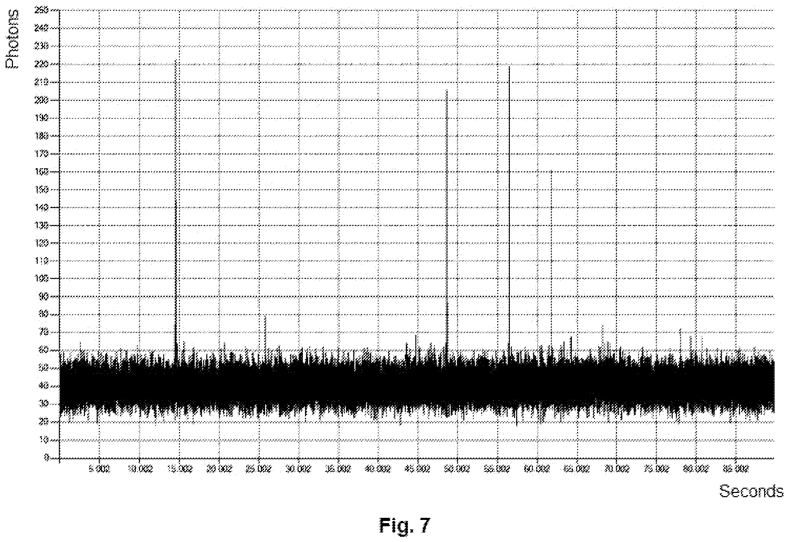

The data received from the sensor is processed by the processor (81). The detection of a particle occurs as a result of the formation of a signal peak relative to the background of **Fig. 7****.** The background component is subtracted from the data and the number of particles in the air volume passing through the device for the time period is calculated based on the number of peaks in the same time period. The data are then extrapolated to the standard volume used in a particular field of activity.

### Data output

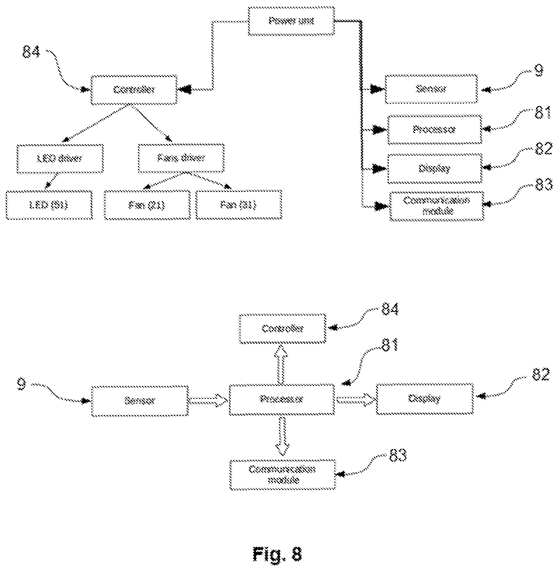

Scheme of data output is present on **Fig. 8****.** The results are displayed on the display (82) or on a separate registration device (computer, smart phone, tablet) connected to the data communication module (83). The data are presented in a quantitative form as the concentration of particles calculated per unit volume of air (standard per m³) and/or in a qualitative form as an indication of the level of particles according to a colour scale from the normal green level to the dangerous red level. Measurement units and data output format can be changed by the user.

The device is designed to receive a communication module (83) transmitting the data to external devices via modern communication channels (communication ports, Bluetooth, Wi-Fi, LAN, mobile network and other).

### Power supply module

The power supply module **(****Fig. 8****)** provides all the device components with power. The module also includes a controller (84) in charge of the operating mode of each component.

### Example

At present, only one certified method exists for controlling airborne VBOs. The method is based on blowing air through an air filter and cultivating and counting the VBO colonies. One such certified instrument is the IMPAKTOR device. Comparative tests of bioaerosol compositions in different rooms were carried out using two methods employing the new device and the IMPAKTOR device.

For the tests, the new device was installed on a table and air was blown through the device for 5 minutes. Measurements data were collected and analyzed. The new device registered the quantity of bacteria like size particles in air.

Comparative measurements were carried in three office rooms. Both devices were installed side by side on the same table. At least 3 tests were carried out in each room. The operating principle of the device is based on the detection of an emission peak relative to the background level indicating the presence of a particle in the air flow. The number of peaks was registered for each test and converted into Fluorescent Biological Aerosol Particles per 1 m³ (FBAP/m³) of air.

Measurements in contaminated room using both methods detected high levels of airborne particles, 314 CFU/m³ and 513 FBAP/m³. In other rooms, meanwhile, low levels of airborne contaminants were detected: 192 CFU/m³ and 263 FBAP/m³ in the first room, 188 CFU/m³ and 292 FBAP/m³ in the second room.

It should be noted that differences in measurement methods impact the absolute values yielded by each method. Based on comparative measurements, however, it can be concluded that the accuracy of air quality measurements using the new device was in good correlation with the results of the measurements made in the examined rooms using the IMPAKTOR device.

### References

Burstein E.A., Abornev S.M., Reshetnyak YK. Decomposition of protein tryptophan fluorescence spectra into log-normal components. I. Decomposition algorithms. Biophysical Journal, 2001, vol. 81, no. 3, pp. 1699-1709.
Jeys T.H., Herzog W.D., Hybl J.D., Czerwinski R.N., Sanchez A. Advanced trigger development. Lincoln Laboratory Journal, 2007, vol. 17, no. 1, pp. 29-60.
Kochelaev E.A., Volchek A.O. Optical recording system for a flow-through optical method of analyzing bioaerosols. Journal of Optical Technology, 2011, vol. 78, no. 6, pp. 365-370.
Pan Y-L. Detection and characterization of biological and other organic-carbon aerosol particles in atmosphere using fluorescence. Journal of Quantitative Spectroscopy and Radiative Transfer, 2015, vol. 150, pp. 12-35.
Sivaprakasam V, Huston A.L., Scotto C., Eversole J.D. Multiple UV wavelength excitation and fluorescence of bioaerosols. Optics Express, 2004, vol. 12, no. 19, pp. 4457-4466.
Usachev E.V, Pankova A.V, Rafailova E.A., Pyankov O.V, Agranovski I.E. Portable automatic bioaerosol sampling system for rapid on-site detection of targeted airborne microorganisms. Journal of Environmental Monitoring, 2012, vol. 14, no. 10, pp. 2739-2745.
AU2002367966B2, System and method for detecting and classifying biological particles.
EP2235736B1, Pathogen detection by simultaneous size/fluorescence measurement.
US7576844, Systems and methods for use in detecting harmful aerosol particles.
WO2007011854A2, Pathogen and particle detector system and method.

## Claims

1. Airborne bacteria detection system, the optical structure of the system includes airflow channel (1) with inlet (2) and outlet (3) units, excitation channel (4) with excitation unit (5), sensor channel (7) with sensor unit (9), the airflow channel (1) is a long tube with two sections, first section and the second section, **characterized in that** between the longitudinal axis of the first section and the longitudinal axis of the second section is an angle α that is less than 180°, and **in that** the walls of the sensor channel (7) are polished and reflective inside to reflect any incident rays, and **in that** the first section has the inlet unit (2) and is located on the same axis as the excitation channel (4), the second section has the outlet unit (3).

2. Airborne bacteria detection system according to the claim 1, **characterized in that** the sensor channel (7) locates closer to the inlet unit (2) than the excitation channel (4).

3. Airborne bacteria detection system according to the claim 1, **characterized in that** the wavelength range of the exciting radiation is 250-300 nm.

4. Airborne bacteria detection system according to the claim 1, **characterized in** an angle β between longitudinal axis of the excitation channel (4) and the longitudinal axis of the sensor channel (7).

5. Airborne bacteria detection system according to the claim 1, **characterized in that** the angle β is limited by the diameters of the excitation unit (5) and the sensor unit (9).

6. Airborne bacteria detection system according to the claim 1, **characterized in that** the inlet unit (2) comprises a light trap with a channel (22) for pumping air, a fan (21), and a universal accessory mounting socket (23).

7. Airborne bacteria detection system according to the claim 1, **characterized in that** the outlet unit (3) comprises a fan (31), a light trap (32) and universal accessory mounting socket (33).

8. Airborne bacteria detection system according to the claim 1, **characterized in that** the fan (21) is interconnected with the fan (31).

9. Airborne bacteria detection system according to the claim 1, **characterized in that** the excitation channel (4) comprises the excitation unit (5), including LED source (51) and filter (52), and the outlet window (6), which can be covered with an optically transparent material, e.g. quartz glass.

10. Airborne bacteria detection system according to the claim 1, **characterized in that** the length of the excitation channel (4) is sufficient to collimate the rays of the source.

11. Airborne bacteria detection system according to the claim 1, **characterized in that** the sensor channel (7) comprises an inlet window (8) and a sensor unit (9) wherein the input window (9) is covered with a transparent material or is fully open.

12. Airborne bacteria detection system according to the claim 1, **characterized in that** the sensor unit (9) comprises band pass filter (92) and a Single Photon Counter (SPC) sensor (91).

13. Airborne bacteria detection system according to the claim 1, **characterized in that** the system performs regular self-tests at intervals depending on the room type, e.g. the testing is more frequent in more contaminated rooms.

## Patentansprüche

1. Detektionssystem für luftübertragene Bakterien, wobei die optische Struktur des Systems einen Luftstromkanal (1) mit Einlass- (2) und Auslass(3)-Einheiten, einen Anregungskanal (4) mit einer Anregungseinheit (5), einen Sensorkanal (7) mit einer Sensoreinheit (9) einschließt, wobei der Luftstromkanal (1) ein langer Schlauch mit zwei Abschnitten, dem ersten Abschnitt und dem zweiten Abschnitt, ist, **dadurch gekennzeichnet, dass** zwischen der Längsachse des ersten Abschnitts und der Längsachse des zweiten Abschnitts ein Winkel α liegt, der kleiner als 180° ist, und dadurch, dass die Wände des Sensorkanals (7) innen poliert und reflektierend sind, um beliebige einfallende Strahlen zu reflektieren, und
dadurch, dass der erste Abschnitt die Einlasseinheit (2) aufweist und sich auf der gleichen Achse wie der Anregungskanal (4) befindet, der zweite Abschnitt die Auslasseinheit (3) aufweist.

2. Detektionssystem für luftübertragene Bakterien nach Anspruch 1, **dadurch gekennzeichnet, dass** sich der Sensorkanal (7) näher an der Einlasseinheit (2) befindet als der Anregungskanal (4).

3. Detektionssystem für luftübertragene Bakterien nach Anspruch 1, **dadurch gekennzeichnet, dass** der Wellenlängenbereich der Anregungsstrahlung 250-300 nm beträgt.

4. Detektionssystem für luftübertragene Bakterien nach Anspruch 1, **gekennzeichnet durch** einen Winkel β zwischen der Längsachse des Anregungskanals (4) und der Längsachse des Sensorkanals (7).

5. Detektionssystem für luftübertragene Bakterien nach Anspruch 1, **dadurch gekennzeichnet, dass** der Winkel β durch die Durchmesser der Anregungseinheit (5) und der Sensoreinheit (9) begrenzt ist.

6. Detektionssystem für luftübertragene Bakterien nach Anspruch 1, **dadurch gekennzeichnet, dass** die Einlasseinheit (2) eine Lichtschleuse mit einem Kanal (22) zum Pumpen von Luft, einen Ventilator (21) und eine universelle Zubehörmontieraufnahme (23) umfasst.

7. Detektionssystem für luftübertragene Bakterien nach Anspruch 1, **dadurch gekennzeichnet, dass** die Auslasseinheit (3) einen Ventilator (31), eine Lichtschleuse (32) und die universelle Zubehörmontieraufnahme (33) umfasst.

8. Detektionssystem für luftübertragene Bakterien nach Anspruch 1, **dadurch gekennzeichnet, dass** der Ventilator (21) mit dem Ventilator (31) verbunden ist.

9. Detektionssystem für luftübertragene Bakterien nach Anspruch 1, **dadurch gekennzeichnet, dass** der Anregungskanal (4) die Anregungseinheit (5), die eine LED-Quelle (51) und Filter (52) einschließt, und das Auslassfenster (6) umfasst, das mit einem optisch transparenten Material, z.B. Quarzglas, bedeckt sein kann.

10. Detektionssystem für luftübertragene Bakterien nach Anspruch 1, **dadurch gekennzeichnet, dass** die Länge des Anregungskanals (4) ausreicht, um die Strahlen der Quelle zu kollimieren.

11. Detektionssystem für luftübertragene Bakterien nach Anspruch 1, **dadurch gekennzeichnet, dass** der Sensorkanal (7) ein Einlassfenster (8) und eine Sensoreinheit (9) umfasst, wobei das Eingangsfenster (9) mit einem transparenten Material bedeckt ist oder vollständig offen ist.

12. Detektionssystem für luftübertragene Bakterien nach Anspruch 1, **dadurch gekennzeichnet, dass** die Sensoreinheit (9) einen Bandpassfilter (92) und einen Einzelfotonenzählungssensor(SPC-Sensor) umfasst (91).

13. Detektionssystem für luftübertragene Bakterien nach Anspruch 1, **dadurch gekennzeichnet, dass** das System regelmäßige Eigenprüfungen in Intervallen durchführt, die von der Raumart abhängen, z.B. erfolgt das Prüfen in stärker kontaminierten Räumen häufiger.

## Revendications

1. Système de détection de bactéries en suspension dans l'air, la structure optique du système comporte un canal de circulation d'air (1) avec des unités d'entrée (2) et de sortie (3), un canal d'excitation (4) avec une unité d'excitation (5), un canal de capteur (7) avec une unité de capteur (9), le canal de circulation d'air (1) est un long tube à deux sections, la première section et la seconde section, **caractérisé en ce qu'**entre l'axe longitudinal de la première section et l'axe longitudinal de la seconde section se situe un angle α qui est inférieure à 180°, et **en ce que** les parois du canal de capteur (7) sont polies et réfléchissantes à l'intérieur pour réfléchir de quelconques rayons incidents, et
**en ce que** la première section a l'unité d'entrée (2) et est située sur le même axe que le canal d'excitation (4), la seconde section a l'unité de sortie (3).

2. Système de détection de bactéries en suspension dans l'air selon la revendication 1, **caractérisé en ce que** le canal de capteur (7) est plus proche de l'unité d'entrée (2) que le canal d'excitation (4).

3. Système de détection de bactéries en suspension dans l'air selon la revendication 1, **caractérisé en ce que** la plage de longueur d'onde du rayonnement d'excitation est de 250 à 300 nm.

4. Système de détection de bactéries en suspension dans l'air selon la revendication 1, **caractérisé par** un angle β entre l'axe longitudinal du canal d'excitation (4) et l'axe longitudinal du canal de capteur (7).

5. Système de détection de bactéries en suspension dans l'air selon la revendication 1, **caractérisé en ce que** l'angle β est limité par les diamètres de l'unité d'excitation (5) et de l'unité de capteur (9).

6. Système de détection de bactéries en suspension dans l'air selon la revendication 1, **caractérisé en ce que** l'unité d'entrée (2) comprend un piège optique avec un canal (22) destiné à pomper de l'air, un ventilateur (21) et une douille universelle de montage d'accessoire (23).

7. Système de détection de bactéries en suspension dans l'air selon la revendication 1, **caractérisé en ce que** l'unité de sortie (3) comprend un ventilateur (31), un piège optique (32) et une douille universelle de montage d'accessoire (33).

8. Système de détection de bactéries en suspension dans l'air selon la revendication 1, **caractérisé en ce que** le ventilateur (21) est interconnecté avec le ventilateur (31).

9. Système de détection de bactéries en suspension dans l'air selon la revendication 1, **caractérisé en ce que** le canal d'excitation (4) comprend l'unité d'excitation (5), comportant une source de DEL (51) et un filtre (52), et la fenêtre de sortie (6), qui peut être recouverte d'un matériau optiquement transparent, par ex. de la silice fondue.

10. Système de détection de bactéries en suspension dans l'air selon la revendication 1, **caractérisé en ce que** la longueur du canal d'excitation (4) est suffisante pour collimater les rayons de la source.

11. Système de détection de bactéries en suspension dans l'air selon la revendication 1, **caractérisé en ce que** le canal de capteur (7) comprend une fenêtre d'entrée (8) et une unité de capteur (9), dans lequel la fenêtre d'entrée (9) est recouverte d'un matériau transparent ou est complètement ouverte.

12. Système de détection de bactéries en suspension dans l'air selon la revendication 1, **caractérisé en ce que** l'unité de capteur (9) comprend un filtre passe-bande (92) et un capteur à compteur de photons uniques (SPC) (91).

13. Système de détection de bactéries en suspension dans l'air selon la revendication 1, **caractérisé en ce que** le système effectue régulièrement des autotests à intervalles réguliers en fonction du type de pièce, par ex. les tests sont plus fréquents dans des pièces plus contaminées.
